# EUROPÄISCHE PATENTSCHRIFT

(11) **EP 3 194 222 B1**
(45) Veröffentlichungstag und Bekanntmachung des Hinweises auf die Patenterteilung: **31.10.2018**
(21) Anmeldenummer: 15756626.6
(22) Anmeldetag: 27.08.2015
(51) Int. Cl.: B60T 7/04, B60T 15/14

(54) **PEDALEINRICHTUNG MIT SEITLICH EINSCHIEBBARER MAGNETSPULENANORDNUNG**
PEDAL DEVICE HAVING A MAGNETIC COIL ASSEMBLY THAT CAN BE LATERALLY INSERTED
SYSTÈME DE PÉDALE AVEC ENSEMBLE BOBINE D'ÉLECTRO-AIMANT À INSERTION LATÉRALE

(30) Priorität: 19.09.2014 DE 102014013974
(43) Veröffentlichungstag der Anmeldung: 26.07.2017
(73) Patentinhaber: KNORR-BREMSE Systeme für Nutzfahrzeuge GmbH, 80809 München (DE)
(72) Erfinder: RÖTHER, Friedbert, 74389 Cleebronn (DE); SCHMAUDER, Thilo, 71732 Tamm (DE); SCHABINGER, Simon, 75245 Neulingen (DE); WÖRNER, Ralf, 75233 Tiefenbronn (DE)
(86) Internationale Anmeldenummer: PCT/EP2015/069578
(87) Internationale Veröffentlichungsnummer: WO 2016/041755

(56) Entgegenhaltungen:
- DE-A1- 2 937 657
- DE-A1- 3 611 941
- DE-A1- 19 852 399

## Beschreibung

### Stand der Technik

Die Erfindung geht aus von einer elektrischen oder elektro-pneumatischen Pedaleinrichtung eines Fahrzeugs zur Eingabe von Anforderungssignalen eines Fahrers des Fahrzeugs, welche wenigstens Folgendes beinhaltet: Ein Gehäuse mit einem Deckel, einem Boden sowie mit einem den Deckel mit dem Boden verbindenden Mantel, ein mit dem Fuß des Fahrers betätigbares Fußpedal, eine im Gehäuse angeordnete induktive Sensoreinrichtung mit einer Magnetspulenanordnung beinhaltend wenigstens eine stromdurchflossene Magnetspule, einen eine Spulenkörperöffnung aufweisenden stationären Spulenkörper, auf welchen die wenigstens eine Magnetspule gewickelt ist, die wenigstens im Inneren der Spulenkörperöffnung ein Magnetfeld erzeugt, sowie wenigstens ein von der Magnetspulenanordnung nach radial außen weg ragendes elektrisches Kontaktelement, welches an die wenigstens eine Magnetspule angeschlossen ist, wenigstens einem im Gehäuse beweglich gelagerten, in die Spulenkörperöffnung eintauchenden Tauchkörper, wobei die Induktivität der wenigstens einen Magnetspule abhängig von der Eintauchtiefe des Tauchkörpers in die Spulenkörperöffnung ist, sowie mit einer mit dem elektrischen Kontaktelement in elektrischem Kontakt stehende Auswerteelektronik, wobei der Tauchkörper mit dem Fußpedal derart in Wirkverbindung steht, dass die Eintauchtiefe des Tauchkörpers in die Spulenkörperöffnung abhängig von einem Betätigungsgrad des Fußpedals ist, und die Auswerteelektronik derart ausgebildet ist, dass sie abhängig von der Eintauchtiefe des Tauchkörpers in die Spulenkörperöffnung ein Pedalbetätigungssignal erzeugt, gemäß dem Oberbegriff von Anspruch 1.

Eine solche, dort als Betriebsbremspedaleinrichtung ausgebildete Pedaleinrichtung ist beispielsweise aus Fig.4 der DE 198 52 399 A1 bekannt. Aus der Beschreibung ist nicht ersichtlich, auf welche Weise die Sensoreinrichtung und insbesondere die Magnetspulenanordnung in dem Gehäuse montiert sind.

Der vorliegenden Erfindung liegt daher die Aufgabe zugrunde, eine Pedaleinrichtung der eingangs erwähnten Art derart fortzubilden, dass auf möglichst einfache Weise hergestellt und montiert werden kann.

Diese Aufgabe wird erfindungsgemäß durch die Merkmale von Anspruch 1 gelöst.

### Offenbarung der Erfindung

Erfindungsgemäß ist vorgesehen, dass der Mantel des Gehäuses eine Umfangsöffnung aufweist, über welche die Magnetspulenanordnung schubladenartig in das Gehäuse derart eingeschoben ist, dass das wenigstens eine elektrische Kontaktelement im Bereich der Umfangsöffnung angeordnet ist, und dass dann wenigstens eine mit elektronischen Komponenten der Auswerteelektronik bestückte Platine im Bereich der Umfangsöffnung an dem Gehäuse derart befestigt ist, dass während der Befestigung der Platine an dem Gehäuse das wenigstens eine von der Magnetspulenanordnung nach radial außen weg ragende, elektrische Kontaktelement mit einer Kontaktaufnahme der wenigstens einen Platine in Kontakt tritt.

Mit anderen Worten wird die Magnetspulenanordnung in Gebrauchslage der Pedaleinrichtung gesehen von der Seite her schubladenartig in die Umfangsöffnung des Mantels des Gehäuses bis in eine vorbestimmte Endlage eingeschoben, welche beispielsweise durch einen Anschlag im Gehäuse definiert ist. Dann erst wird die mit elektronischen Komponenten der Auswerteelektronik bestückte Platine im Bereich der Umfangsöffnung an dem Gehäuse derart befestigt und gegenüber diesem ausgerichtet, dass während der Befestigung der Platine an dem Gehäuse das wenigstens eine von der Magnetspulenanordnung nach radial außen weg ragende, elektrische Kontaktelement mit Leiterbahnen der wenigstens einen Platine automatisch in Kontakt tritt. Damit werden in einem einzigen Montageschritt einerseits die Platine am Gehäuse und andererseits der elektrische Kontakt zwischen der Platine und der wenigstens einen Magnetspule hergestellt.

Dabei kann die Platine insbesondere in einem eigenen, zur Umfangsöffnung offenen Platinengehäuse aufgenommen sein, das von außen an dem Rand der Umfangsöffnung in dem Mantel des Gehäuses befestigt ist.

Die Vorteile dieser Maßnahmen liegen weiterhin auch zum einen darin, dass dann der Umfang der Magnetspulenanordnung samt des wenigstens einen nach radial außen ragenden elektrischen Kontaktelements größer als der Innendurchmesser oder die Innenmaße des Gehäuses ausfallen kann. Dann können die radialen Dimensionen der wenigstens einen Magnetspule besser an die Anforderungen der Messung abgestimmt werden. Weiterhin kann auch die Länge des wenigstens einen, von der Magnetspulenanordnung nach radial außen ragenden elektrischen Kontaktelements variabel sein, ohne dass höhere Anforderungen an Längentoleranzen gestellt werden müssten, zumal das Kontaktelement zunächst eine Überlänge aufweisen kann und dessen endgültige Länge dann erst bei der Montage der Platine bzw. des Platinengehäuses durch Abschneiden von überschüssiger Länge festgelegt wird.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist die Magnetspulenanordnung in axialer Richtung gesehen zwischen einem am Gehäuse befestigten Führungskörper zur Führung des Tauchkörpers und einem Gehäuseabschnitt geklemmt, wobei der Führungskörper eine Durchgangsöffnung aufweist, in welcher der Tauchkörper axial beweglich geführt ist.

Gemäß einer Weiterbildung wird eine Platine der Auswerteelektronik von einem Platinengehäuse getragen, welches an dem Mantel des Gehäuses befestigt ist und die Umfangsöffnung verschließt.

Gemäß einem Verfahren zur Herstellung einer solchen Pedaleinrichtung wird die Magnetspulenanordnung durch die Umfangsöffnung hindurch schubladenartig in das Gehäuse derart von der Seite her eingeschoben wird, dass die Magnetspulenanordnung an einem Gehäuseabschnitt axial zur Anlage kommt und das wenigstens eine elektrische Kontaktelement im Bereich der Umfangsöffnung angeordnet ist, und dass dann der Führungskörper zusammen mit dem bereits in den Führungskörper eingesetzten Tauchkörper durch eine axiale Öffnung des Gehäuses in das Gehäuse eingesetzt und in dem Gehäuse derart befestigt wird, dass die Magnetspulenanordnung zwischen dem Führungskörper und dem Gehäuseabschnitt axial geklemmt wird, und dass dann das Platinengehäuse mit der Platine im Bereich der Umfangsöffnung an dem Gehäuse derart befestigt wird, dass vor oder während der Befestigung des Platinengehäuses das wenigstens eine elektrische Kontaktelement mit der Kontaktaufnahme der Platine in Kontakt tritt.

Damit wird daher die Magnetspulenanordnung, nachdem sie von der Seite her oder radial in das Gehäuse eingesetzt worden ist, in axialer Richtung geklemmt, indem der Führungskörper am Gehäuse kopfseitig oder deckelseitig befestigt wird.

Wie oben bereits erwähnt, kann wenigstens eine Platine der Auswerteelektronik von einem eigenen Platinengehäuse getragen werden, welches an dem Mantel des Gehäuses befestigt wird und die Umfangsöffnung des Mantels des Gehäuses verschließt. Die korrespondierenden Befestigungsmittel einerseits am Gehäuseteils bzw. am Platinengehäuse und am Gehäuse bzw. an der Umfangsöffnung im Mantel des Gehäuses sind dann derart ausgebildet, dass mit der Montage des Platinengehäuses bzw. des Gehäuseteils am Gehäuse gleichzeitig das wenigstens eine Kontaktelement der Magnetspulenanordnung mit der Kontaktaufnahme der Platine in elektrischen Kontakt tritt.

Damit wird eine äußerst einfache Montage der Pedaleinrichtung möglich.

Gemäß einer Weiterbildung kann die Magnetspulenanordnung in dem Gehäuse durch Rastelemente beispielsweise radial verrastbar sein, welche mit anderen Worten in Einschubrichtung wirken und dadurch die Magnetspulenanordnung weiterhin gegen ein unbeabsichtigtes Herausfallen oder Herausbewegen aus dem Gehäuse sichern.

Die axiale Führung des Tauchkörpers in der Durchgangsöffnung des Führungskörpers kann auch durch eine Verdrehsicherung ergänzt sein, beispielsweise mittels eines Kerbzahnprofils, so dass die Umfangslage des Tauchkörpers gegenüber dem Führungskörper und damit auch gegenüber der Magnetspulenanordnung definiert ist.

Gemäß einer Weiterbildung dieser Maßnahme kann vorgesehen sein, dass die Klemmung des Spulenkörpers zwischen dem Führungskörper und dem Gehäuseabschnitt eine axial wirksame Federanordnung beinhaltet. Infolgedessen sind keine hohen Anforderungen an die Maßtoleranzen insbesondere in axialer Richtung zu stellen. Weiterhin ist dadurch auch eine sichere axiale Fixierung der Magnetspulenanordnung im Hinblick auf eine möglichst hohe Messgenauigkeit gegeben.

Gemäß einer besonders zu bevorzugenden Maßnahme ragt der Führungskörper in die Spulenkörperöffnung hinein, wobei der Führungskörper an seiner radial äußeren Umfangsfläche nach radial außen ragende, deformierbare Zentriervorsprünge aufweist, über welche er in der Spulenöffnung des Spulenkörpers zentriert ist, oder wobei der Spulenkörper in seiner Spulenöffnung nach radial innen ragende, deformierbare Zentriervorsprünge aufweist, über welche der Führungskörper in der Spulenöffnung des Spulenkörpers zentriert ist.

Wenn vorzugsweise der Tauchkörper am Führungskörper, nicht aber am Magnetspulenkörper geführt ist, dann findet kein Kontakt des Tauchkörpers mit dem Spulenkörper statt bzw. ist auch nicht notwendig, so dass kein Reibungsverschleiß zwischen dem Tauchkörper und dem Spulenkörper auftreten kann, welcher das Messsignal beeinflussen könnte.

Eine besonders Platz sparende Anordnung ergibt sich, wenn die Plattenebene der Platine parallel zu einer Mittelachse des Gehäuses angeordnet ist. Dann ist die Platine gleichermaßen tangential an dem Gehäuse angeordnet.

Besonders bevorzugt wird der Tauchkörper zumindest teilweise durch einen Stößel gebildet, welcher direkt oder indirekt von dem Fußpedal betätigt wird. Der Stößel ist dann multifunktional, indem er einerseits wenigstens teilweise den in die Spulenöffnung eintauchenden Tauchkörper bildet, der zusammen mit der wenigstens einen auf den Spulenkörper gewickelten Magnetspule deren Induktivität als Messprinzip beeinflusst und zum andern die Betätigungskraft des Fußpedals axial z.B. auf eine Druckfederanordnung überträgt, die sich beispielsweise an einem ein Doppelsitzventil betätigenden Ventilkolben oder am Gehäuse abstützt, um dem Fahrer über die Reaktionskraft ein Betätigungsgefühl zu geben.

Ganz besonders bevorzugt ist die Pedaleinrichtung eine Betriebspedalbremseinrichtung einer elektro-pneumatischen oder elektrischen Bremseinrichtung eines Fahrzeugs.

Bei rein elektrischen Betriebsbremseinrichtungen ist wenigstens ein elektrischer Bremskreis vorhanden, welcher die in die Betriebsbremspedaleinrichtung integrierte induktive Sensoreinrichtung samt Auswerteelektronik beinhaltet, welche abhängig von einer Betätigung des Betriebsbremspedals ein elektrisches Betriebsbremsanforderungssignal erzeugt, welches in ein elektronisches Bremssteuergerät eingesteuert wird, das abhängig von dem Betriebsbremsanforderungssignal Stellbefehle für elektrische Bremsaktuatoren erzeugt.

Bei elektro-pneumatischen Betriebsbremseinrichtungen ist indes ein vorrangiger elektro-pneumatischer Betriebsbremskreis vorhanden, welchem ein elektrischer Kanal der Betriebsbremspedaleinrichtung bzw. Fußbremsmoduls (FBM) zugeordnet ist, d.h. mit Betätigung des Betriebsbremspedals erzeugt die in der Betriebsbremspedaleinrichtung angeordnete induktive Sensoreinrichtung zusammen mit der Auswerteelektronik ein elektrisches Betriebsbremsanforderungssignal, welches in ein elektronisches Bremssteuergerät eingesteuert wird, um durch eine entsprechende Ansteuerung von Magnetventilen bzw. Druckregelmodulen einen dem Betriebsbremsanforderungssignal entsprechenden pneumatischen Bremsdruck in pneumatische Betriebsbremszylinder einzusteuern. Parallel hierzu bewirkt die Betätigung des Betriebsbremspedals, dass ein mit diesem durch eine Stößel/Stößelaufnahme verbundener Stößel, von dem bevorzugt wenigstens ein Abschnitt den Tauchkörper bildet, über eine Druckfederanordnung einen Ventilkolben betätigt, welcher wiederum ein Doppelsitzventil der Betriebsbremspedaleinrichtung steuert, um einen der Bremsanforderung entsprechenden pneumatischen Steuerdruck in wenigstens einem pneumatischen Kanal der Betriebsbremspedaleinrichtung zu erzeugen, der dann in nachrangigen, rein pneumatischen Betriebsbremskreisen einen Bremsdruck in den Bremszylindern bilden, wenn der vorrangige elektro-pneumatische Betriebsbremskreis aufgrund eines Defekts ausgefallen ist.

Die Erfindung umfasst daher auch eine elektro-pneumatische oder elektrische Bremseinrichtung eines Fahrzeugs beinhaltend eine oben beschriebene Pedaleinrichtung sowie ein Fahrzeug beinhaltend eine solche elektro-pneumatische oder elektrische Bremseinrichtung.

Alternativ könnte die Pedaleinrichtung auch eine Gaspedaleinrichtung mit einem Gaspedal oder eine Kupplungspedaleinrichtung mit einem Kupplungspedal sein, wobei eine Betätigung des jeweiligen Pedals mittels der Sensoreinrichtung gemessen wird.

### Zeichnung

Die Erfindung wird nachstehend anhand eines Ausführungsbeispiels unter Bezugnahme auf die beigefügte Zeichnung näher beschrieben. Es zeigt
- Fig.1: einen Längsschnitt durch eine bevorzugte Ausführungsform eines oberen Teils einer Betriebsbremspedaleinrichtung gemäß der Erfindung;
- Fig.2: einen schematischen Längsschnitt eines Teils der Ausführungsform von Fig.1;
- Fig.3: eine Draufsicht auf die Ausführungsform von Fig.2;
- Fig.4: einen Längsschnitt, welcher eine Montage der Ausführungsform von Fig.2 veranschaulicht.

### Beschreibung des Ausführungsbeispiels

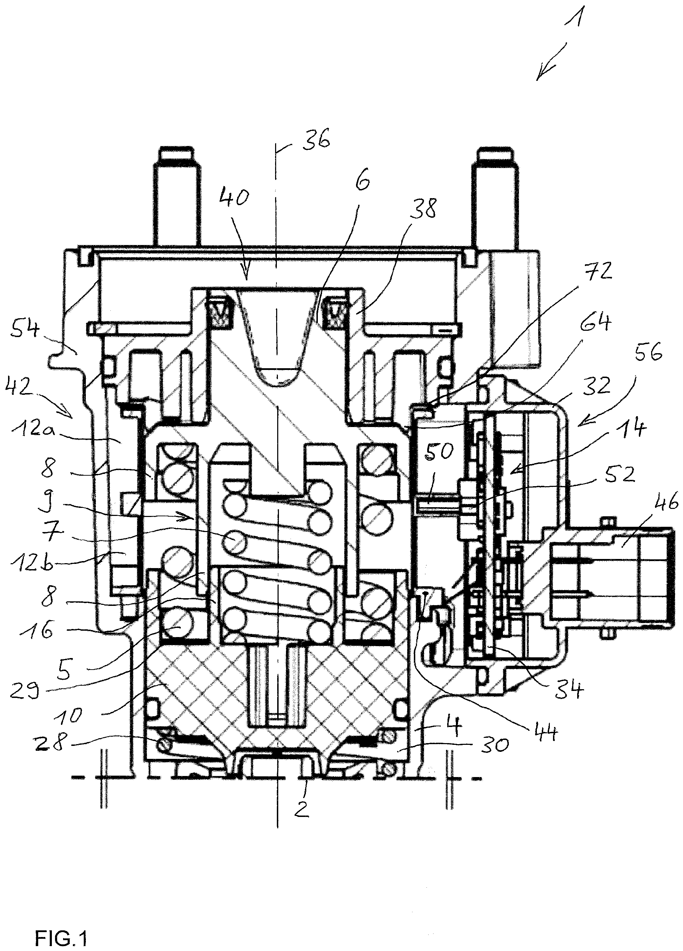

Der in der Fig.1 bis Fig.4 gezeigte obere Teil einer elektro-pneumatischen Betriebsbremspedaleinrichtung 1 oder eines elektro-pneumatischen Betriebsbremsventils bzw. Fußbremsmoduls als bevorzugtes Ausführungsbeispiel einer Pedaleinrichtung gemäß der Erfindung ist Bestandteil einer elektro-pneumatischen Bremseinrichtung eines Nutzfahrzeugs. Die elektro-pneumatische Betriebsbremseinrichtung weist beispielsweise einen elektrischen Bremskreis und zwei pneumatische Betriebsbremskreise auf.

Die Betriebsbremspedaleinrichtung 1 beinhaltet unter anderem einen von einem nicht dargestellten Betriebsbremspedal betätigten, in einem Gehäuse 4 axial beweglichen Stößel 6. Der Stößel 6 weist ein Stößelhemd 8 auf, an welchem eine Schraubendruckfederanordnung 9, die beispielsweise aus zwei parallel und koaxial angeordneten Schraubenfedern besteht, einer ersten, beispielsweise äußeren Schraubenfeder 5 und einer zweiten, beispielsweise inneren Schraubenfeder 7, einendseitig abgestützt ist, welche anderendseitig an einem Ventilkolben 10 abgestützt ist. Der Stößel 6 besteht beispielsweise aus einem elektrisch leitenden und paramagnetischen Material, insbesondere aus Aluminium. Alternativ kann der Stößel 6 oder Magnetanker auch aus einem weichmagnetischen oder ferromagnetischen Material bestehen. Weiterhin bestehen die Schraubenfedern 5, 7 der Schraubenfederanordnung 9 vorzugsweise aus paramagnetischem Material.

Der Stößel 6 ist bevorzugt an dem Ventilkolben 10 axial beweglich geführt, beispielsweise dadurch, dass das Stößelhemd 8 ein Ventilhemd 16 des Ventilkolbens 10 gleitend umschließt. Der äußeren Schraubenfeder 5 und dem Ventilkolben 10 kann ein auswechselbares Distanzelement 29 angeordnet sein.

Der Ventilkolben 10 ist über eine dritte, in Fig.1 nur teilweise sichtbare Schraubenfeder 28 an dem Gehäuse 4 abgestützt. Weiterhin begrenzt der Ventilkolben 10 mit seiner von der Schraubenfederanordnung 9 weg weisenden Kolbenfläche eine Arbeitskammer 30, welche über einen Arbeitsanschluss des Gehäuses 4 mit einer zu pneumatischen Radbremszylindern führenden Bremsdruckleitung verbunden ist.

Der Ventilkolben 10 betätigt in bekannter Weise ein hier aus Maßstabsgründen nicht mehr dargestelltes Doppelsitzventil, um den Arbeitsanschluss bzw. die Arbeitskammer entweder mit einer Entlüftung (Fahrstellung) oder mit einem Vorratsanschluss (Bremsstellung) zu verbinden, an welchen eine zu einem Druckluftvorrat führende Vorratsdruckleitung angeschlossen ist. Der Arbeitsanschluss steht über eine pneumatische Druckleitung des pneumatischen Betriebsbremskreises mit einem pneumatischen Anschluss eines Druckregelmoduls in Verbindung, welche den pneumatischen Betriebsbremskreis über ein integriertes Backup-Magnetventil an pneumatische Betriebsbremszylinder weiter schleift. Die Arbeitskammer ist daher je nach Betätigungszustand des Doppelsitzventils entweder mit einer Entlüftung oder mit einem Druckluftvorrat verbunden.

Ferner ist eine einen Teil einer berührungslos arbeitenden, induktiven Sensoreinrichtung bildende Magnetspulenanordnung 42 mit einem Spulenkörper 44 sowie auf den Spulenkörper 44 gewickelten und hier beispielsweise axial hintereinander angeordneten induktiven Wegmessspulen 12a, 12b im Gehäuse 4 axial im Bereich des Stößelhemds 8 des Stößels 6 angeordnet. Die Wegmessspulen 12a, 12b sind mit einer in einem an das Gehäuse 4 an einem Umfangsabschnitt angeflanschten Elektronikgehäuse 32 angeordneten Auswerteelektronik 14 elektrisch leitend verbunden ist. Die Komponenten der Auswerteelektronik 14 sind auf einer Platine 34 angeordnet, welche im eingebauten Zustand des Elektronikgehäuses 32 beispielsweise parallel zu einer Mittelachse 36 der Betriebsbremspedaleinrichtung 1 ist. Insbesondere ist die Plattenebene der Platine 34 parallel zur Mittelachse 36 des Gehäuses 4 angeordnet. Dann ist die Platine 34 tangential an dem Gehäuse 4 angeordnet.

Der Spulenkörper 44 mit den Wegmessspulen 12a, 12b umschließt insbesondere den Stößel 6 und insbesondere dessen Stößelhemd 8, die Schraubenfederanordnung 9 ringförmig und ist dabei innerhalb des Gehäuses 4 ortsfest angeordnet. Die Wegmessspulen 12a, 12b sind dadurch mit der Auswerteelektronik 14 elektrisch verbindbar, ohne dass eine solche Verbindung selbst einer Lageänderung unterliegt.

Ein oberer Anschlag für den Stößel 6 kann durch einen Führungskörper 38 gebildet werden, der in dem Gehäuse 4 kopfseitig gehalten und in dessen zentraler Durchgangsöffnung 40 der Stößel 6 dichtend geführt ist. Die axiale Führung des Stößels 6 in der Durchgangsöffnung 40 des Führungskörpers 38 kann auch durch eine Verdrehsicherung ergänzt sein, beispielsweise mittels eines Kerbzahnprofils, so dass die Umfangslage des Stößels 6 gegenüber dem Führungskörper 38 definiert ist.

Dabei sind das Gehäuse 4, der Stößel 6, die Schraubenfederanordnung 9, der Ventilkolben 10, die Wegmessspulen 12a, 12b und der Führungskörper 38 im Wesentlichen, d.h. gegebenenfalls mit konstruktiv bedingt lokal abweichenden Ausformungen wie etwa durch das Elektronikgehäuse 32 bedingt, koaxial mit der Mittelachse 36 angeordnet.

Eine obere Endposition des Stößels 6, in welcher dieser an den Führungskörper 38 anschlägt, markiert dann den Fahrzustand mit gelöster Betriebsbremse, bei welchem der Ventilkolben 10 von einem im Gehäuse 4 axial geführten Ventilkörper 2 des Doppelsitzventils abgehoben ist und dadurch Druckluft vom Arbeitsanschluss über die Arbeitskammer in die Entlüftung strömen kann, was eine Entlüftung des pneumatischen Betriebsbremskreises nach sich zieht. Die Wegmessspulen 12a, 12b erzeugen dabei ein entsprechendes elektrisches (Null-) Betriebsbremsanforderungssignal, welches von der Auswerteelektronik 14 ausgewertet wird.

Wenn der Fahrer dann ausgehend vom Fahrzustand mit dem Fuß die Betriebsbremsplatte betätigt, bewegt sich dadurch der Stößel 6 axial nach unten. Diese Bewegung wird bis zu einem Anfangshub ausschließlich durch die erste Schraubenfeder 5 auf den Ventilkolben 10 übertragen. Wenn dann der Anfangshub überwunden ist, kommt der Stößel 6 an der zweiten Schraubenfeder 7 zur Anlage, wodurch nun auch die zweite Schraubenfeder 7 die Betätigungskraft auf den Ventilkolben 10 überträgt.

Da der Ventilkolben 10 über die dritte Schraubenfeder 28 an dem Gehäuse 4 abgestützt ist, werden die beiden Schraubenfedern 5, 7 der Schraubenfederanordnung 9 um einen Kompressionsweg komprimiert, wie anhand von Fig. 1 leicht vorstellbar ist.

Die induktiven Wegmessspulen 12a, 12b verändern dann, wenn das Stößelhemd 8 des Stößels 6 aufgrund einer Betätigung der Betriebsbremsplatte in axialer Richtung gesehen aus der ersten Wegmessspule 12a aus- und in die zweite Wegmessspule 12b tiefer eintaucht, ihre Induktivität L, was durch die Auswerteelektronik 14 detektierbar ist, welche dann mittels einer auf der Platine 34 integrierten Schaltung aus der veränderten Induktivität L der Wegmessspulen 12a, 12b ein der axialen Bewegung des Stößels 6 proportionales elektrisches Betriebsbremsanforderungssignal bildet.

Insbesondere taucht der Stößel 6 bzw. dessen Stößelhemd 8 bei einer solchen Hubbewegung aus der ersten Wegmessspule 12a heraus und in die zweite Wegmessspule 12b ein und erzeugen dadurch Im Hinblick auf die jeweilige Induktivität L gegenläufige Signale, welche die jeweilige Induktivitätsänderung charakterisieren und aus welchen dann die Auswerteelektronik 14 ein elektrisches Betriebsbremsanforderungssignal erzeugt.

Die Auswerteelektronik 14 ist über eine beispielsweise integrierte digitale Schnittstelle (A/D-Wandler) und über eine elektrische Steckverbindung 46 an eine hier nicht gezeigte Kommunikationsleitung, beispielsweise an einen Datenbus angeschlossen ist, an dem auch ein zentrales elektronisches Bremssteuergerät der elektro-pneumatischen Betriebsbremseinrichtung angeschlossen ist, so dass das elektrische Betriebsbremsanforderungssignal innerhalb des elektrischen Betriebsbremskreises in dieses elektronische Bremssteuergerät eingesteuert wird. In dem Bremssteuergerät kann das Betriebsbremsanforderungssignal dann achsweise oder radweise durch höhere Funktionen wie beispielsweise eine automatische achslastabhängige Bremsdruckregelung, eine Differenzschlupfregelung etc. verändert werden, bevor es in Druckregelmodule der Vorderachse bzw. der Hinterachse eingesteuert wird. In den Druckregelmodulen sind lokale Steuergeräte installiert, die dann mittels einer Einlass-/Auslass-Magnetventilkombination, die ein Relaisventil vorsteuert, um einen von den Betriebsbremsanforderungssignalen abhängigen Bremsdruck in den zugeordneten pneumatischen Betriebsbremszylinder(n) zu erzeugen. Mittels eines jeweils in ein solches Druckregelmodul integrierten Drucksensors findet dann eine Regelung des ausgesteuerten Ist-Bremsdrucks durch Angleichung an einen durch das Betriebsbremsanforderungssignal repräsentierten Soll-Bremsdruck statt.

Die Erfindung ist nicht auf das oben beschriebene Ausführungsbeispiel beschränkt. Gemäß einer weiteren, hier nicht gezeugten Ausführungsform kann sie auch beispielsweise in einer rein elektrischen Betriebsbremspedaleinrichtung 1 einer elektrischen Bremseinrichtung ausgebildet sein, welche lediglich über wenigstens einen elektrischen Kanal verfügt. In diesem Fall ist dann weder ein Ventilkolben 10 noch ein Doppelsitzventil vorhanden. Anstatt an dem Ventilkolben 10 ist dann die Schraubenfederanordnung 9 an einem Boden oder an einer Innenwandung (Gehäuseabschnitt) des Gehäuses 4 abgestützt. Auch kann anstatt einer Schraubenfederanordnung aus Stahlschraubenfedern eine Federanordnung aus Gummi oder aus einem anderen elastischen Material verwendet werden.

Die von einer elektrischen Energiequelle mit elektrischem Wechselstrom versorgten und daher wechselstromdurchflossenen Wegmessspulen 12a, 12b sind Bestandteil der Magnetspulenanordnung 42, die weiterhin den eine Spulenkörperöffnung 48 aufweisenden stationären Spulenkörper 44 aufweist, auf welchen die Wegmessspulen 12a, 12b gewickelt sind, die wenigstens im Inneren der Spulenkörperöffnung 48 ein Magnetfeld erzeugen. Weiterhin weist die Magnetspulenanordnung 42 wenigstens ein von dem Spulenkörper 44 nach radial außen weg ragendes elektrisches Kontaktelement 50 auf, welches an die Wegmessspulen 12a, 12b angeschlossen ist. Das oder die elektrische(n) Kontaktelement(e) 50 steht (stehen) mit auf der Platine 34 angeordneten elektronischen Bauelementen der Auswerteelektronik 14 in leitender Verbindung, beispielsweise dadurch, dass das wenigstens eine, bevorzugt als sog. Pin ausgebildete Kontaktelement 50 in eine Kontaktaufnahme 52 der Platine 34 hineinragt, welche mit einer Leiterbahn der Platine 34 in Verbindung steht. Die Verbindung zwischen dem Kontaktelement 50 und der Kontaktaufnahme 52 kann beispielsweise eine Steckverbindung sein, die beim Befestigen des Platinengehäuses 32 an dem Gehäuse 4 automatisch zustande kommt, nachdem das Kontaktelement 50 zuvor entsprechend ausgerichtet wurde.

Das vorzugsweise größtenteils zylindrische Gehäuse 4 der Betriebsbremspedaleinrichtung 1 weist einen umlaufenden Mantel 54 auf, wobei in dem Mantel 54 eine Umfangsöffnung 56 ausgebildet ist, an deren Rand das Elektronikgehäuse oder Platinengehäuse 32 befestigt ist.

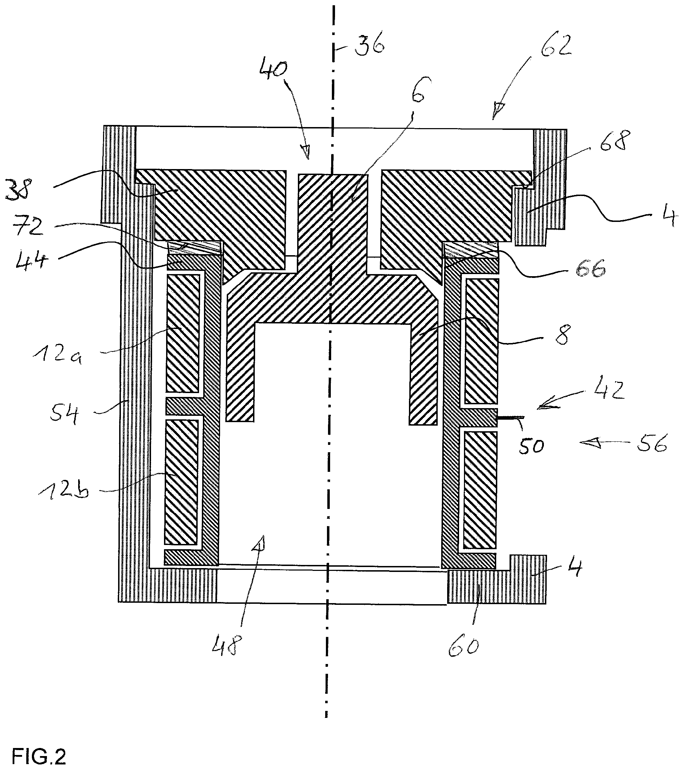

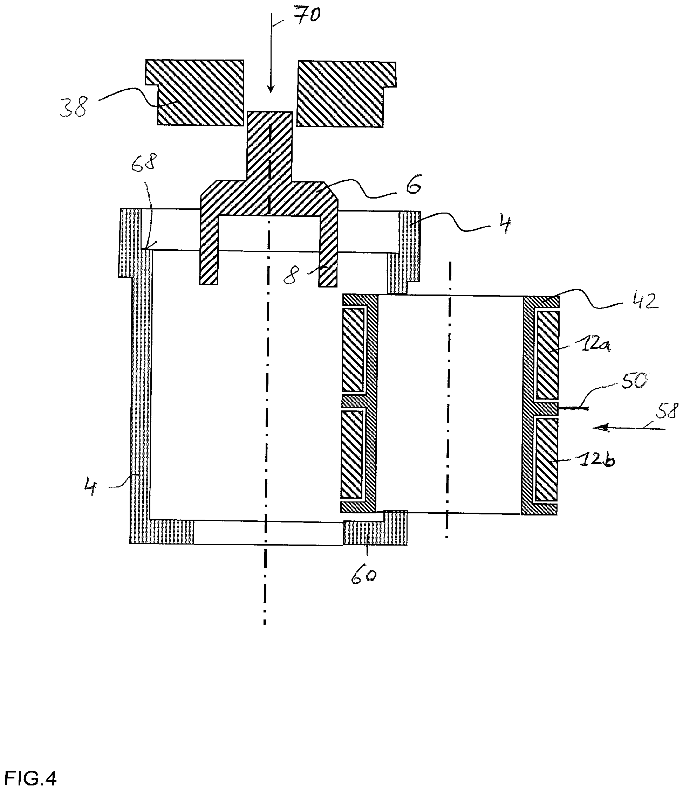

Über diese Umfangsöffnung 56 wird dann, wie insbesondere durch den ersten Pfeil 58 in Fig.4 symbolisiert ist, die Magnetspulenanordnung 42 komplett schubladenartig in das Gehäuse 4 derart eingeschoben, dass das wenigstens eine elektrische Kontaktelement 50 im Bereich der Umfangsöffnung 56 angeordnet bzw. in diese hinein- oder aus dieser nach außen ein Stück weit herausragt. Wie insbesondere anhand von Fig.2 bis Fig.4 erkennbar ist, verfügt das Gehäuse 4 über eine ringförmige, vom Mantel 54 nach radial innen weisende Innenwandung 60, auf welcher der Spulenkörper 44 der Magnetspulenanordnung 42 nach erfolgtem Einschub bodenseitig zur Anlage kommt.

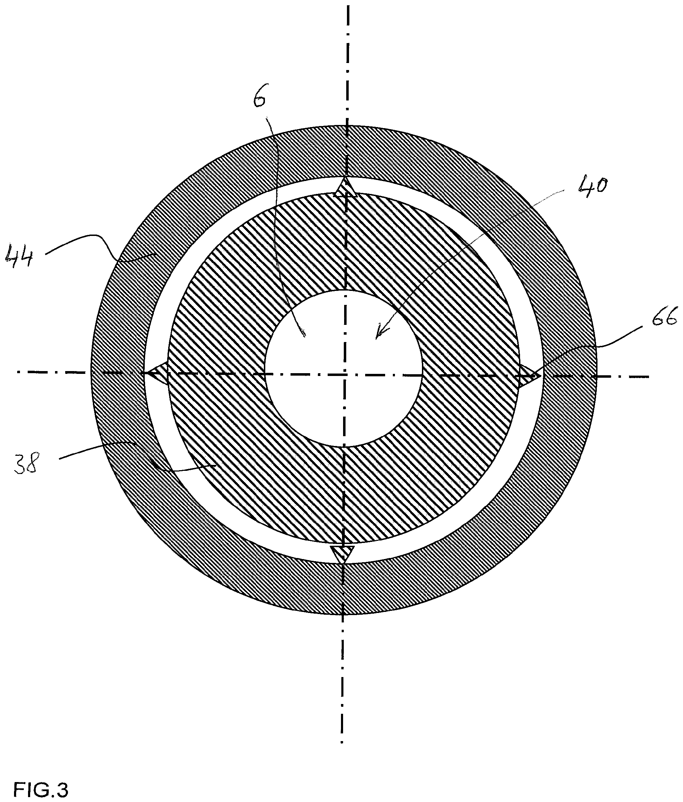

Nachdem die Magnetspulenanordnung 42 auf diese Weise im Gehäuse 4 platziert wurde, wird durch die in Gebrauchslage gesehen obere Öffnung 62 im Gehäuse 4 von oben her der Führungskörper 38 zusammen mit dem bereits in den Führungskörper 38 eingesetzten Stößel 6 in das Gehäuse 4 eingesetzt, wie in Fig.4 veranschaulicht ist. Dabei greift ein unteres, ringförmiges Ende 64 des Führungskörpers 38, an dem nach radial außen und deformierbare Zentrierelemente 66 ausgebildet sind in die Spulenkörperöffnung 48 des Spulenkörpers 44 ein, wobei der Außendurchmesser des Führungskörpers 38 inklusive Zentrierelemente 66 geringfügig größer ist als der Innendurchmesser der Spulenkörperöffnung 48, wodurch sich die Zentrierelemente 66 verformen, wie anhand von Fig.3 leicht vorstellbar ist.

Der Führungskörper 38 wird dabei soweit in axialer Richtung in das Gehäuse 4 eingesetzt, bis er an einem Gehäuseabsatz 68 zur Anlage kommt. In dieser axialen Position klemmt er zwischen sich und der Innenwandung 60 den Spulenkörper 44 bzw. die Magnetspulenanordnung 42 in axialer Richtung. Damit wird daher die Magnetspulenanordnung 42, insbesondere deren Spulenkörper 44, nachdem die Magnetspulenanordnung 42 von der Seite her oder radial in das Gehäuse 4 eingesetzt worden ist, in axialer Richtung geklemmt, indem der Führungskörper 38 am Gehäuse 4 kopfseitig oder deckelseitig befestigt wird, wie der zweite Pfeil 70 in Fig.4 veranschaulicht. Anstatt in einer Innenwandung 60 kann die Stützfläche durch einen beliebigen Gehäuseabschnitt des Gehäuses gebildet werden, beispielsweise durch einen Boden des Gehäuses 4 in dem Fall, in welchem bei einer rein elektrischen Betriebsbremseinrichtung kein pneumatischer Betriebsbremskreis und damit auch kein Ventilkolben 10 vorhanden ist, der ein Doppelsitzventil steuert.

Die Klemmung des Spulenkörpers 44 zwischen dem Führungskörper 38 und der Innenwandung 60 des Gehäuses 4 kann auch eine axial wirksame Federanordnung beinhalten, hier beispielsweise in Form einer Wellfeder 72, die axial zwischen einer oberen Kopffläche des Spulenkörpers 44 und einer Bodenfläche des Führungskörpers 38 z.B. als axialer Spiel- oder Toleranzausgleich geklemmt ist.

Besonders bevorzugt ist in Einschubrichtung gesehen die Magnetspulenanordnung 42 und insbesondere deren Spulenkörper 44 in dem Gehäuse 4 durch hier nicht erkennbare Rastelemente insbesondere in radialer Richtung verrastbar, welche die Magnetspulenanordnung 44 gegen ein unbeabsichtigtes Herausfallen oder Herausbewegen aus dem Gehäuse 4 sichern. Dabei können z.B. miteinander zusammenwirkende Rastelemente am Spulenkörper 44 sowie am Gehäuse 4 vorgesehen sein.

Erst wenn die Magnetspulenanordnung 42 in ihrer zentrierten Endlage axial geklemmt bzw. gesichert ist, wird das Platinengehäuse 32 mit der darin befestigten Platine 34 im Bereich der Umfangsöffnung 56 an dem Gehäuse 4 bzw. an dem Rand der Umfangsöffnung 56 derart befestigt, dass während der Befestigung des Platinengehäuses 32 bzw. der Platine 34 an dem Gehäuse 4 das wenigstens eine von der Magnetspulenanordnung 42 nach radial außen weg ragende, elektrische Kontaktelement 50 mit der Kontaktaufnahme 52 der Platine 34 in Kontakt tritt, wie Fig.1 zeigt.

Bei der in Fig.1 bis Fig.4 gezeigten Ausführungsform wird der Stößel 6 am Führungskörper 38, nicht aber am Spulenkörper 44 geführt. Durch die Gleitverbindung Stößelhemd 8/Ventilkolbenhemd 16 wird der Stößel 6 zusätzlich noch am Ventilkolben 10 axial geführt, welcher wiederum im Gehäuse 4 axial geführt ist. Diese zusätzliche Führung am Ventilkolben 10 ist aber optional. Stattdessen kann der Stößel 6 auch ausschließlich am Führungskörper 38 geführt sein.

Im montierten Zustand erfasst die induktive Sensoreinrichtung aus Magnetspulenanordnung 42 und Auswerteelektronik 14 dann einen Betätigungsgrad des Betriebsbremspedals zwischen einer eine Nichtbetätigung repräsentierenden Stellung und einer eine maximale Betätigung repräsentierenden Stellung graduell und erzeugt ein diesen Betätigungsgrad repräsentierendes Betätigungssignal abhängig von der Eintauchtiefe des Stößels 6 bzw. des Stößelhemds 8 in die Spulenkörperöffnung 48 des Spulenkörpers 44 und damit in das von den Wegmessspulen 12a, 12b erzeugte Magnetfeld.

Im Rahmen der Erfindung liegt auch jede mögliche Kombination von Merkmalen der oben beschriebenen Ausführungsbeispiele.

### Bezuqszeichenliste

- 1: Betriebsbremspedaleinrichtung
- 2: Ventilkörper
- 4: Gehäuse
- 5: erste Schraubenfeder
- 6: Stößel
- 7: zweite Schraubenfeder
- 8: Stößelhemd
- 9: Schraubenfederanordnung
- 10: Ventilkolben
- 11: Stellschraube
- 12a/b: Wegmessspulen
- 14: Auswerteelektronik
- 16: Ventilkolbenhemd
- 28: dritte Schraubenfeder
- 29: Distanzelement
- 30: Arbeitskammer
- 32: Elektronikgehäuse
- 34: Platine
- 36: Mittelachse
- 38: Führungskörper
- 40: Durchgangsöffnung
- 42: Magnetspulenanordnung
- 44: Spulenkörper
- 46: Steckverbindung
- 48: Spulenkörperöffnung
- 50: Kontaktelement
- 52: Kontaktaufnahme
- 54: Mantel
- 56: Umfangsöffnung
- 58: erster Pfeil
- 60: Innenwandung
- 62: Öffnung
- 64: Ende
- 66: Zentrierelemente
- 68: Gehäuseabsatz
- 70: zweiter Pfeil
- 72: Wellfeder

## Patentansprüche

1. Elektrische oder elektro-pneumatische Pedaleinrichtung eines Fahrzeugs zur Eingabe von Anforderungssignalen eines Fahrers des Fahrzeugs, welche wenigstens Folgendes beinhaltet:
a) Ein Gehäuse (4) mit einem Deckel (38), einem Boden sowie mit einem den Deckel (38) mit dem Boden verbindenden Mantel (54),
b) ein mit dem Fuß des Fahrers betätigbares Fußpedal,
c) eine im Gehäuse (4) angeordnete induktive Sensoreinrichtung mit
c1) einer Magnetspulenanordung (42) beinhaltend wenigstens eine stromdurchflossene Magnetspule (12a, 12b), einen eine Spulenkörperöffnung (48) aufweisenden stationären Spulenkörper (44), auf welchen die wenigstens eine Magnetspule (12a, 12b) gewickelt ist, die wenigstens im Inneren der Spulenkörperöffnung (48) ein Magnetfeld erzeugt, sowie wenigstens ein von der Magnetspulenanordnung (42) nach radial außen weg ragendes elektrisches Kontaktelement (50), welches an die wenigstens eine Magnetspule (12a, 12b) angeschlossen ist,
c2) wenigstens einem im Gehäuse (4) beweglich gelagerten, in die Spulenkörperöffnung (48) eintauchenden Tauchkörper (6), wobei die Induktivität (L) der wenigstens einen Magnetspule (12a, 12b) abhängig von der Eintauchtiefe des Tauchkörpers (6) in die Spulenkörperöffnung (48) variiert, sowie mit
c3) einer mit dem elektrischen Kontaktelement (50) in elektrischem Kontakt stehende Auswerteelektronik (14), wobei
d) der Tauchkörper (6) mit dem Fußpedal derart in Wirkverbindung steht, dass die Eintauchtiefe des Tauchkörpers (6) in die Spulenkörperöffnung (48) abhängig von einem Betätigungsgrad des Fußpedals ist, und
e) die Auswerteelektronik (14) derart ausgebildet ist, dass sie abhängig von der Eintauchtiefe des Tauchkörpers (6) in die Spulenkörperöffnung (48) ein Pedalbetätigungssignal erzeugt,
**dadurch gekennzeichnet, dass**
f) der Mantel (54) des Gehäuses (4) eine Umfangsöffnung (56) aufweist, über welche die Magnetspulenanordnung (42) schubladenartig in das Gehäuse (4) derart eingeschoben ist, dass das wenigstens eine elektrische Kontaktelement (50) im Bereich der Umfangsöffnung (56) angeordnet ist, und dass
g) wenigstens eine mit elektronischen Komponenten der Auswerteelektronik (14) bestückte Platine (34) im Bereich der Umfangsöffnung (56) an dem Gehäuse (4) derart befestigt ist, dass während der Befestigung der Platine (34) an dem Gehäuse (4) das wenigstens eine von der Magnetspulenanordnung (42) nach außen weg ragende, elektrische Kontaktelement (50) mit einer Kontaktaufnahme (52) der wenigstens einen Platine (34) in Kontakt tritt.

2. Pedaleinrichtung nach Anspruch 1, **dadurch gekennzeichnet, dass** die Magnetspulenanordnung (42) in axialer Richtung gesehen zwischen einem am Gehäuse (4) befestigten Führungskörper (38) zur Führung des Tauchkörpers (6) und einem Gehäuseabschnitt (60) geklemmt ist, wobei der Führungskörper (38) eine Durchgangsöffnung aufweist, in welcher der Tauchkörper (6) axial beweglich geführt ist.

3. Pedaleinrichtung nach einem der vorhergehenden Ansprüche, **dadurch gekennzeichnet, dass** eine Platine (34) der Auswerteelektronik (14) von einem Platinengehäuse (32) getragen wird, welches an dem Mantel (54) des Gehäuses (4) befestigt ist und die Umfangsöffnung (56) verschließt.

4. Pedaleinrichtung nach Anspruch 2 oder 3, **dadurch gekennzeichnet, dass** der Führungskörper (38) in die Spulenkörperöffnung (48) hineinragt und an seiner radial äußeren Umfangsfläche deformierbare Zentriervorsprünge (66) aufweist, über welche er in der Spulenkörperöffnung (48) zentriert ist, oder dass der Spulenkörper (44) in seiner Spulenkörperöffnung (48) nach radial innen ragende, deformierbare Zentriervorsprünge (66) aufweist, über welche der Führungskörper (38) in der Spulenkörperöffnung (48) des Spulenkörpers (44) zentriert ist.

5. Pedaleinrichtung nach einem der Ansprüche 2 bis 4, **dadurch gekennzeichnet, dass** der Tauchkörper (6) am Führungskörper (38), nicht aber am Spulenkörper (44) geführt ist.

6. Pedaleinrichtung nach einem der Ansprüche 2 bis 5, **dadurch gekennzeichnet, dass** die Klemmung der Magnetspulenanordnung (42) zwischen dem Führungskörper (38) und dem Gehäuseabschnitt (60) eine axial wirksame Federanordnung (72) beinhaltet.

7. Pedaleinrichtung nach einem der vorhergehenden Ansprüche, **dadurch gekennzeichnet, dass** die Magnetspulenanordnung (42) in dem Gehäuse (4) durch Rastelemente verrastbar ist.

8. Pedaleinrichtung nach einem der vorhergehenden Ansprüche, **dadurch gekennzeichnet, dass** eine Plattenebene der Platine (34) parallel zu einer Mittelachse (36) des Gehäuses (4) angeordnet ist.

9. Pedaleinrichtung nach einem der vorhergehenden Ansprüche, **dadurch gekennzeichnet, dass** der Tauchkörper (6) zumindest teilweise durch einen Stößel (6) gebildet wird, welcher durch das Fußpedal betätigt wird.

10. Pedaleinrichtung nach einem der vorhergehenden Ansprüche, **dadurch gekennzeichnet, dass** sie eine Betriebspedalbremseinrichtung einer elektro-pneumatischen oder elektrischen Bremseinrichtung eines Fahrzeugs ist.

11. Elektro-pneumatische oder elektrische Bremseinrichtung eines Fahrzeugs beinhaltend eine Pedaleinrichtung nach einem der vorhergehenden Ansprüche.

12. Fahrzeug beinhaltend eine elektro-pneumatische oder elektrische Bremseinrichtung nach Anspruch 11.

13. Verfahren zur Herstellung einer Pedaleinrichtung nach den Ansprüchen 1 bis 3, **dadurch gekennzeichnet, dass**
a) die Magnetspulenanordnung (42) durch die Umfangsöffnung (56) hindurch schubladenartig in das Gehäuse (4) derart von der Seite her eingeschoben wird, dass die Magnetspulenanordnung (42) an einem Gehäuseabschnitt (60) axial zur Anlage kommt und das wenigstens eine elektrische Kontaktelement (50) im Bereich der Umfangsöffnung (56) angeordnet ist, und dass dann
b) der Führungskörper (38) zusammen mit dem bereits in den Führungskörper (38) eingesetzten Tauchkörper (6) durch eine axiale Öffnung (62) des Gehäuses (4) in das Gehäuse (4) eingesetzt und in dem Gehäuse (4) derart befestigt wird, dass die Magnetspulenanordnung (42) zwischen dem Führungskörper (38) und dem Gehäuseabschnitt (60) axial geklemmt wird, und dass dann
c) das Platinengehäuse (32) mit der Platine (34) im Bereich der Umfangsöffnung (56) an dem Gehäuse (4) derart befestigt wird, dass vor oder während der Befestigung des Platinengehäuses (32) das wenigstens eine elektrische Kontaktelement (50) mit der Kontaktaufnahme (52) der Platine (34) in Kontakt tritt.

## Claims

1. An electric or electropneumatic pedal device of a vehicle for inputting request signals of a driver of the vehicle, which pedal device comprises at least the following:
a) a housing (4) with a cover (38), a bottom and with a casing (54) which connects the cover (38) to the bottom,
b) a foot pedal which can be actuated by way of the foot of the driver,
c) an inductive sensor device which is arranged in the housing (4), having
c1) a magnet coil arrangement (42) comprising at least one magnet coil (12a, 12b), through which a current flows, a stationary coil body (44) which has a coil body opening (48) and onto which the at least one magnet coil (12a, 12b) is wound which generates a magnetic field at least in the interior of the coil body opening (48), and at least one electric contact element (50) which protrudes radially to the outside away from the magnet coil arrangement (42) and is connected to the at least one magnet coil (12a, 12b),
c2) at least one , plunger body (6) which plunges into the coil body opening (48) and is mounted movably in the housing (4), the inductance (L) of the at least one magnet coil (12a, 12b) varying in a manner which is dependent on the plunging depth of the plunger body (6) into the coil body opening (48), and having
c3) an evaluation electronics means (14) which is in electric contact with the electric contact element (50),
d) the plunger body (6) being operatively connected to the foot pedal in such a way that the plunging depth of the plunger body (6) into the coil body opening (48) is dependent on a degree of actuation of the foot pedal, and
e) the evaluation electronics means (14) being configured in such a way that it generates a pedal actuation signal in a manner which is dependent on the plunging depth of the plunger body (6) into the coil body opening (48),
**characterized in that**
f) the casing (54) of the housing (4) has a circumferential opening (56), via which the magnet coil arrangement (42) is pushed into the housing (4) in the manner of a drawer in such a way that the at least one electric contact element (50) is arranged in the region of the circumferential opening (56), and **in that**
g) at least one printed circuit board (34) which is populated with electronic components of the evaluation electronics means (14) is fastened to the housing (4) in the region of the circumferential opening (56) in such a way that, during the fastening of the printed circuit board (34) to the housing (4), the at least one electric contact element (50) which protrudes outward away from the magnet coil arrangement (42) comes into contact with a contact support (52) of the at least one printed circuit board (34).

2. The pedal device as claimed in claim 1, **characterized in that**, as viewed in the axial direction, the magnet coil arrangement (42) is clamped between a guide body (38), which is fastened to the housing (4) for guiding the plunger body (6), and a housing section (60), the guide body (38) having a through opening, in which the plunger body (6) is guided such that it can be moved axially.

3. The pedal device as claimed in either of the preceding claims, **characterized in that** a printed circuit board (34) of the evaluation electronics means (14) is supported by a printed circuit board housing (32) which is fastened to the casing (54) of the housing (4) and closes the circumferential opening (56) .

4. The pedal device as claimed in claim 2 or 3, **characterized in that** the guide body (38) protrudes into the coil body opening (48) and, on its radially outer circumferential face, has deformable centering projections (66), via which it is centered in the coil body opening (48), or **in that**, in its coil body opening (48), the coil body (44) has deformable centering projections (66) which protrude radially to the inside and via which the guide body (38) is centered in the coil body opening (48) of the coil body (44).

5. The pedal device as claimed in one of claims 2 to 4, **characterized in that** the plunger body (6) is guided on the guide body (38), but not on the coil body (44).

6. The pedal device as claimed in one of claims 2 to 5, **characterized in that** the clamping means of the magnet coil arrangement (42) between the guide body (38) and the housing section (60) comprises an axially effective spring arrangement (72).

7. The pedal device as claimed in one of the preceding claims, **characterized in that** the magnet coil arrangement (42) can be latched in the housing (4) by way of latching elements.

8. The pedal device as claimed in one of the preceding claims, **characterized in that** a board plane of the printed circuit board (34) is arranged parallel to a center axis (36) of the housing (4).

9. The pedal device as claimed in one of the preceding claims, **characterized in that** the plunger body (6) is formed at least partially by way of a plunger (6) which is actuated by way of the foot pedal.

10. The pedal device as claimed in one of the preceding claims, **characterized in that** it is a service pedal brake device of an electropneumatic or electric brake device of a vehicle.

11. An electropneumatic or electric brake device of a vehicle comprising a pedal device as claimed in one of the preceding claims.

12. A vehicle comprising an electropneumatic or electric brake device as claimed in claim 11.

13. A method for producing a pedal device as claimed in claims 1 to 3, **characterized in that**
a) the magnet coil arrangement (42) is pushed through the circumferential opening (56) into the housing (4) in the manner of a drawer from the side in such a way that the magnet coil arrangement (42) comes axially into contact with a housing section (60) and the at least one electric contact element (50) is arranged in the region of the circumferential opening (56), and **in that**
b) the guide body (38) is then inserted, together with the plunger body (6) which has already been inserted into the guide body (38), into the housing (4) through an axial opening (62) of the housing (4) and is fastened in the housing (4) in such a way that the magnet coil arrangement (42) is clamped axially between the guide body (38) and the housing section (60), and **in that**
c) the printed circuit board housing (32) with the printed circuit board (34) is then fastened to the housing (4) in the region of the circumferential opening (56) in such a way that, before or during the fastening of the printed circuit board housing (32), the at least one electric contact element (50) comes into contact with the contact support (52) of the printed circuit board (34).

## Revendications

1. Dispositif à pédale électrique ou électropneumatique d'un véhicule pour l'envoi de signaux de demande d'un conducteur du véhicule, qui comporte au moins ce qui suit :
a) un boîtier (4) ayant un couvercle (38), un fond, ainsi qu'une enveloppe (54) reliant le couvercle (38) au fond,
b) une pédale à pied pouvant être actionnée par le pied du conducteur,
c) un dispositif inductif de capteur monté dans le boîtier (4) et ayant
c1) un premier agencement (42) à bobine d'électroaimant, comportant au moins une bobine (12a, 12b) d'électroaimant parcourue par du courant, un corps (44) de bobine fixe, qui a au moins une ouverture (48) et sur lequel la au moins une bobine (12a, 12b) d'électroaimant est enroulée, en produisant un champ magnétique au moins à l'intérieur de l'ouverture (48) du corps de la bobine, ainsi qu'au moins un élément (50) de contact électrique, qui s'éloigne vers l'extérieur radialement de l'agencement (42) de bobine d'électroaimant et qui est raccordé à la au moins une bobine (12a, 12b) d'électroaimant,
c2) au moins un plongeur (6) monté mobile dans le boîtier (4) et plongeant dans l'ouverture (48) de corps de bobine, l'inductance (L) de la au moins une bobine (12a, 12b) d'électroaimant variant en fonction de la profondeur de plongée du plongeur (6) dans l'ouverture (8) du corps de bobine, ainsi que
c3) une électronique (14) d'exploitation en contact électrique avec l'élément (50) de contact électrique, dans lequel
d) le plongeur (6) étant en relation, fonctionnelle avec la pédale à pied, de manière à ce que la profondeur de plongée du plongeur (6) dans l'ouverture (48) du corps de bobine dépende d'un degré d'actionnement de la pédale à pied et
e) l'électronique (14) d'exploitation est constituée de manière à produire un signal d'actionnement de la pédale en fonction de la profondeur de plongée du plongeur (6) dans l'ouverture (48) du corps de bobine,
**caractérisé en ce que**
f) l'enveloppe (54) du boîtier (4) a une ouverture (56) de pourtour, par laquelle l'agencement (42) de bobine d'électroaimant est inséré à la manière d'un tiroir dans le boîtier (4), de façon à ce que le au moins un élément (50) de contact électrique soit disposé dans la région de l'ouverture (56) de pourtour et **en ce que**
g) au moins une platine (34) équipée de composants électroniques de l'électronique (14) d'exploitation est fixée dans la région de l'ouverture (56) de pourtour au boîtier (4), de manière à ce que, pendant la fixation de la platine (34) au boîtier (4), le au moins un élément (50) de contact électrique, s'éloignant vers l'extérieur de l'agencement (42) de bobine d'électroaimant, entre en contact avec un logement (52) de contact de la au moins une platine (34).

2. Dispositif à pédale suivant la revendication 1, **caractérisé en ce que** l'agencement (42) à bobine d'électroaimant est, considéré dans la direction axiale, serré entre une partie (60) du boîtier et un corps (38) de guidage, fixé au boîtier (4), pour guider le plongeur (6), le corps (38) de guidage ayant une ouverture de passage, dans laquelle le plongeur (6) est guidé en étant mobile axialement.

3. Dispositif à pédale suivant l'une des revendications précédentes, **caractérisé en ce qu'**une platine (34) de l'électronique (14) d'exploitation est portée par un boîtier (32) de platine, qui est fixé à l'enveloppe (54) du boîtier (4) et qui ferme l'ouverture (56) de pourtour.

4. Dispositif à pédale suivant la revendication 2 ou 3, **caractérisé en ce que** le corps (38) de guidage pénètre dans l'ouverture (48) du corps de bobine et a, sur sa surface de pourtour extérieure radialement, des saillies (66) de centrage déformables, par lesquelles il est centré, dans l'ouverture (48) du corps de bobine, ou **en ce que** le corps (44) de bobine a, dans son ouverture (48), des saillies (66) de centrage en saillie vers l'intérieur radialement et déformables, par lesquelles le corps (38) de guidage est centré dans l'ouverture (48) du corps (44) de bobine.

5. Dispositif à pédale suivant l'une des revendications 2 à 4, **caractérisé en ce que** le plongeur (6) est guidé au corps (38) de guidage, mais non au corps (44) de bobine.

6. Dispositif à pédale suivant l'une des revendications 2 à 5, **caractérisé en ce que** le serrage de l'agencement (42) de bobine d'électroaimant, entre le corps (38) de guidage et la partie (60) du boîtier, comporte un agencement (72) de ressort à effet axial.

7. Dispositif à pédale suivant l'une des revendications précédentes, **caractérisé en ce que** l'agencement (42) de bobine d'électroaimant peut être encliqueté dans le boîtier (4) par des éléments d'encliquetage.

8. Dispositif à pédale suivant l'une des revendications précédentes, **caractérisé en ce qu'**un plan de la platine (34) est parallèle à un axe (36) médian du boîtier (4).

9. Dispositif à pédale suivant l'une des revendications précédentes, **caractérisé en ce que** le plongeur (6) est formé, au moins en partie, par un poussoir (6), qui est actionné par la pédale à pied.

10. Dispositif à pédale suivant l'une des revendications précédentes, **caractérisé en ce que** c'est un dispositif de frein de service à pédale d'un dispositif de freinage pneumatique ou électrique d'un véhicule.

11. Dispositif de freinage électropneumatique ou électrique d'un véhicule comportant un dispositif à pédale suivant l'une des revendications précédentes.

12. Véhicule comportant un dispositif de freinage électropneumatique ou électrique suivant la revendication 11.

13. Procédé de fabrication d'un dispositif à pédale suivant les revendications 1 à 3, **caractérisé en ce que**
a) on introduit, depuis le côté, l'agencement (42) de bobine d'électroaimant dans l'ouverture (56) de pourtour à la manière d'un tiroir dans le boîtier (4), de manière à ce que l'agencement (42) de bobine d'électroaimant vienne sur une partie (60) du boîtier en contact axialement et de manière à ce que le au moins un élément (50) de contact électrique soit disposé dans la région de l'ouverture (56) de pourtour et **en ce que**, ensuite
b) on insère le corps (38) de guidage ensemble avec le plongeur (6) déjà inséré dans le corps (38) de guidage par une ouverture (62) axiale du boîtier (4) dans le boîtier (4) et on le fixe dans le boîtier (4), de manière à serrer axialement l'agencement (42) de bobine d'électroaimant entre le corps (38) de guidage et la partie (60) du boîtier et **en ce que**, ensuite
c) on fixe le boîtier (32) de la platine avec la platine (34) dans la région d'ouverture (56) de pourtour sur le boîtier (4), de manière à ce que, avant ou pendant la fixation du boîtier (32) de la platine, le au moins un élément (50) de contact électrique entre en contact avec le logement (52) de contact de la platine (34).
